# EUROPEAN PATENT SPECIFICATION

(11) **EP 3 277 136 B1**
(45) Date of publication and mention of the grant of the patent: **30.01.2019**
(21) Application number: 16712056.7
(22) Date of filing: 30.03.2016
(51) Int. Cl.: A47J 31/36, A47J 31/44

(54) **A MACHINE FOR DISPENSING A BEVERAGE COMPRISING AN INTERFACE WITH SAFETY COVER**
GETRÄNKESPENDER MIT EINER BEDIENSCHNITTSTELLE MIT SICHERHEITSABDECKUNG
DISTRIBUTEUR DE BOISSON COMPRENANT UNE INTERFACE AVEC COUVERCLE DE SÉCURITÉ

(30) Priority: 02.04.2015 EP 15162301
(43) Date of publication of application: 07.02.2018
(73) Proprietor: Nestec S.A., 1800 Vevey (CH)
(72) Inventor: AGON, Fabien Ludovic, 1358 Valeyres-Sous -Rances (CH); BYUN, Da Mi, 1007 Lausanne (CH); HANAUER, Bianca, 80799 München (DE); MAGATTI, Marco, 1010 Lausanne (CH); MAYER, Markus Johannes, 81369 München (DE); SCHMIEDBAUER, Matthias, 80336 München (DE)
(74) Representative: Schnyder, Frank Simon
(86) International application number: PCT/EP2016/056883
(87) International publication number: WO 2016/156372

(56) References cited:
- WO-A1-2013/127906
- KR-B1- 101 481 913

## Description

### Field of the Invention

The field of the invention pertains to beverage dispensing machines with a safe user-interface, such as beverage machines using capsules of an ingredient of the beverage to be prepared.

### Background Art

Certain beverage preparation machines use capsules containing ingredients to be extracted or to be dissolved; for other machines, the ingredients are stored and dosed automatically in the machine or else are added at the time of preparation of the drink.

Most beverage machines possess within a housing: filling means that include a pump for liquid, usually water, which pumps the liquid from a source of water that is cold or indeed heated through heating means, such as a heating resistor, a thermoblock or the like, a brewing unit in which an ingredient is brewed with water or a mixing unit in which ingredients are mixed together, and a beverage outlet for dispensing the prepared beverage. Examples of fluid circuits are disclosed in US 2,715,868, 5,392,694, 5,943,472, 5,992,298, 6,554,588, WO 2006/032599, WO 2009/024500, WO 2009/150030 and WO 2010/006953. The brewing unit may be manual, as for instance disclosed in WO 2005/004683, WO2007/135136 and WO 2009/043630, or motorized, as for instance disclosed in EP1767129, WO 2012/025258, WO 2012/025259, WO 2012/093108, WO 2013/127476, WO 2014/056642, WO 2014/056821, WO 2014/060370, WO 2014/096122, WO 2014/096123, EP2014163793.4 and EP14163810.6, and the references cited therein.

The machines may be arranged to dispense beverages for small and large cups. Arrangements to properly position the cups under the outlet are known. Examples of such machines are disclosed in EP 0 549 887, EP 1 440 639, EP 1 731 065, EP 1 867 260, US 5,161,455, US 5,353,692, WO 2009/074557, WO 2009/074559, WO 2009/135869, WO 2011/154492, WO 2012/007313, WO 2013/186339, EP2014198712.3, EP2014198710.7 and EP2014198715.6, and the references cited therein.

Such machines are usually arranged to be placed at some convenient location on a support surface in a kitchen or bar or in an office or in another suitable environment, typically close to the mains and to a source of water such as close to the kitchen sink, and are not easily movable. Moveable coffee machine are however known as disclosed in EP 1 878 368 and EP 1 864 598, and the references cited therein.

With the view of reducing the machine's footprint or operating volume, it is known to integrate the machine components, e.g. as disclosed in WO 2009/130099, WO 2012/072764, WO 2012/072766, WO 2012/093107, WO 2012/126971, WO 2013/127906. To adapt the shape of the machine to different environments, it is known to makes the machine articulated, e.g. as disclosed in WO 2012/055767 and WO 2013/104643.

### Summary of the Invention

An objective of the invention is to provide a solution or at least an alternative to the prior art configurations. A particular object of the invention is to provide a beverage dispensing machine that has a fool proof or at least a safe user-interface.

The invention thus relates to machines for dispensing a beverage from a capsule containing a beverage ingredient.

For the purpose of the present description, a "beverage" is meant to include any human-consumable liquid substance, such as tea, coffee, hot or cold chocolate, milk, soup, baby food, etc... A "capsule" is meant to include any pre-portioned beverage ingredient, such as a flavouring ingredient, within an enclosing packaging of any material, in particular an airtight packaging, e.g. plastic, aluminium, recyclable and/or biodegradable packagings, and of any shape and structure, including soft pods or rigid cartridges containing the ingredient. The capsule may contain an amount of ingredient for preparing a single beverage serving or a plurality of beverage servings.

The machine includes an external housing having an external front face. The external housing may have at least one of: one or more external lateral side faces; an external rear face; an external top face; and an external bottom face.

The machine may include a beverage outlet located on the external front face and above a front area for placing a user-receptacle, e.g. a cup or a mug, for collecting beverage dispensed from the outlet.

Suitable advanced beverage outlet configurations, that include drop management arrangements, are for instance disclosed in WO 2006/050769, WO 2012/072758, WO 2013/127907, EP2014186738.2, EP2014195048.5 and EP14195067.5. For the purpose of implementing the present invention, such drop management is optional. For instance, a simple machine outlet of the type disclosed in US8091469 or WO 2009/074550 can be used.

The machine includes a capsule handling device that is located in the housing and that is fluidically connected to the beverage outlet. The handling device has a first part and a second part that are relatively movable between a transfer position for receiving and/or evacuating the capsule and an extraction position for extracting the capsule between the first and second parts.

The machine has an opening in the external housing. Typically, the opening can be in the abovementioned external front or lateral or rear or top face. The opening leads into a passage for guiding the capsule to the capsule handling device with its parts in the transfer position. The device's parts are relatively movable to their extraction position for extracting this capsule.

The machine includes a cover that is movable adjacent to the external housing, such as slidable and/or pivotable, between an open position away from the opening for allowing insertion of the capsule into the passage via the opening and a closed position over or across the opening to prevent insertion of the capsule into the passage via the opening.

Examples of such passages and covers are for example disclosed in WO2007/135136, WO 2012/072766, WO 2012/093107, WO 2012/126971, WO 2013/127906, WO 2014/056641, WO 2014/056642 and PCT/EP14/076211.

Furthermore, the machine comprises a user-interface which is operable by a user to extract the capsule between the first and second parts in their extraction position.

The first and second parts can be movable manually, such as by a user-handle, and/or movable automatically, such as by a motor, between the transfer and the extraction positions.

The first and second parts may be arranged to form in the extraction position a mixing chamber for housing the capsule, e.g. a brewing chamber, such as a chamber delimited by at least a cavity in one part of the first and second parts and by a cooperating cavity or lid formed by the other part of the first and second parts.

Examples of suitable capsule handling devices, as well as their actuation (manual, automatic, semiautomatic, or fully motorized) and integration into a beverage machine, are provided in greater details in EP 1 646 305, EP 1 859 713, EP 1 859 714, WO 2009/043630, WO 2012/025258 and WO 2013/127476 and in the other references cited above.

The beverage preparation machine can be an in-home or out of home machine. The machine may be a coffee, tea, chocolate, cacao, milk, soup, baby food, etc... preparation machine. The machine may be arranged for preparing within a beverage processing module, which includes the above capsule handling device, a beverage by passing hot or cold water or another liquid through a capsule containing an ingredient, such as a flavoring ingredient, of the beverage to be prepared, such as ground coffee or tea or chocolate or cacao or milk powder.

The beverage preparation typically includes the mixing of a plurality of beverage ingredients, e.g. water and milk powder, and/or the infusion of a beverage ingredient, such as an infusion of ground coffee or tea with water. One or more of such ingredients may be supplied in loose and/or agglomerate powder form and/or in liquid form, e.g. in a concentrate form. A carrier or dilution liquid, e.g. water, may be mixed with such ingredient to form the beverage.

For instance, a predetermined amount of beverage is formed and dispensed on user-request, which corresponds to a serving. The volume of such a serving may be in the range of 25 to 200 ml or up to 300 or 400 ml, e.g. the volume for filling a cup or mug, depending on the type of beverage. Formed and dispensed beverages may be selected from ristrettos, espressos, lungos, cappuccinos, cafe latte, americano coffees, teas, etc... A coffee machine may be configured for dispensing espressos, e.g. an adjustable volume of 20 to 60 ml per serving, and/or for dispensing lungos, e.g. a volume in the range of 70 to 150 ml per serving.

The beverage preparation module may be connected to a source of liquid, e.g. water.

The source may be a liquid reservoir. Further details on suitable reservoirs are for example disclosed in WO2007/135136, WO 2010/128109, WO 2011/083103, WO 2011/089210 and EP 2 228 633.

Alternatively, the module can be connected directly to the tap that serves as a source of liquid, e.g. water.

The module can include at least one of a liquid driver, a thermal conditioner and a beverage mixing cavity e.g. a chamber controlled by an actuator for receiving a beverage ingredient via an ingredient passage. The ingredient may be mixed in the chamber with the liquid to prepare the beverage. Such an ingredient may be provided within a capsule.

Examples of modules provided with a fluid circuit including a thermal conditioner and/or a liquid driver are disclosed in EP 1 253 844, EP 1 380 243 and EP 1 809 151, WO 2009/074550, WO 2009/130099, WO 2009/150030, WO 2010/108700, WO 2011/107574 and WO 2013/098173.

In accordance with the invention, the user-interface is: covered by the cover when the cover is in the open position so that the user-interface is inoperable by a user when the capsule handling device is accessible from outside via the opening and the passage; and uncovered by the cover when the cover is in the closed position so that the user-interface is operable by a user when the capsule handling device is inaccessible from outside via the opening and the passage.

Hence, a user is prevented from operating the user-interface when the cover is not covering the opening. When the user-interface controls the circulation of liquid in the capsule handling device, the cover must first be moved onto the opening leading to the capsule handling device so that the user is not exposed to liquid or gas projections from the capsule handling device. Likewise, when the user-interface controls the relative movement of the first and second parts of the capsule handling device, the opening leading to the capsule handling device must first be covered by the cover before the user-interface can be operated by the user to cause the relative movement of the first and second parts of the capsule handling device, whereby the user is inhibited from sticking body parts (e.g. a finger) via the opening into the capsule handling device when the first and second parts are relatively moving.

The machine typically comprises a fluid circuit for circulating beverage ingredient from the capsule when extracted between the first and second parts.

Examples of fluid circuits are disclosed in WO 2009/074550 and WO 2009/130099, the fluid sequence of which can be adapted in a machine according to the present invention.

The fluid circuit can be fluidically connected to a source of liquid, such as a water thank, and can comprise a liquid driver, such as a pump, for driving the liquid from the source into the capsule handling device for feeding the liquid to the capsule (and combining the liquid with the beverage ingredient of the capsule), for instance via a temperature conditioner, such as a heater and/or a cooler, and via an inlet of the first or second part.

Examples of modules provided with a fluid circuit including a thermal conditioner and/or a liquid driver are disclosed in EP 1 253 844, EP 1 380 243 and EP 1 809 151, WO 2009/074550, WO 2009/130099, WO 2009/150030, WO 2010/108700, WO 2011/107574 and WO 2013/098173.

The user-interface can be configured to control the liquid driver to drive the liquid from the source of liquid into the capsule handling device.

The machine may have one or more further user-interfaces such as further user-interfaces for setting at least one parameter relating to beverage preparation, power management and machine servicing. Such beverage preparation parameters may relate to the beverage volumes, beverage temperature as well as preparation sequences, such as beverages made of different phases such as more or less separate coffee and milk phases, e.g. cappuccinos and latte machiattos.

Typically, the user-interface(s) is/are connected to a control unit that controls the machine elements active for preparing the beverage. Such control units and active elements, e.g. liquid driver and thermal conditioner, etc... are well known in the art of beverage machines.

The machine may include a fluid guide for fluidically connecting the capsule handling device to the outlet along a guide direction. For instance, an overall direction of extraction of the beverage ingredient in the capsule and a direction of dispensing of the beverage out of the outlet extend along skew lines. The dispensing direction and the guide direction can be in a plane that is generally orthogonal to the overall direction of extraction.

The machine may have two external spaced-apart lateral side faces that extend rearwards behind the external front face and that face each other. At least one part of the first and second parts of the capsule handling device can be arranged to translate towards and away from at least one of the two external lateral side faces so that the first and second parts relatively move between the transfer and the extraction positions.

Such a configuration departs from a standard state of the art configurations, e.g. as disclosed in WO 2009/043630, in which the capsule handling device extends and moves longitudinally orthogonally to the machine's front face. In the latter configuration the machine extends narrowly behind the front face over a significant depth. In the present configuration, the machine has a large front face that extends over a short depth. Consequently, the machine can be placed on a support surface that has a short depth, e.g. a shelf.

Typically the machine may have an overall depth over its overall height of 10 to 30 cm, e.g. 15 to 25 cm. The overall height of the machine may be of the order of 20 to 35 cm, e.g. 25 to 30 cm. The machine's overall width can be about 25 to 45 cm, e.g. 35 to 40 cm.

At least one part of the first and second parts that is arranged to translate towards and away from the at least one of the two external lateral side faces can be configured to move generally in parallel to at least one of: the external front face; the external rear face (when present); the external top face (when present); and the external bottom face (when present).

The first and second parts can be relatively movable between a transfer position for receiving and/or evacuating the capsule and an extraction position for extracting the capsule between the first and second parts, the first and second parts being movable along a translation axis that intercepts at least one of the first and second external lateral side faces. Optionally, the translation axis extends generally in parallel to at least one of: the external front face; the external rear face (when present); the external top face (when present); and the external bottom face (when present).

At least one of the first and second parts that is arranged to translate towards and away from the external lateral side face(s) can be arranged to move generally in parallel to an overall direction of extraction of the beverage ingredient in the capsule when extracted between the first and second parts.

The front area may have a movable user-receptacle support body, such as a support body that is movable between a first position for placing a short user-receptacle under the outlet and a second position for placing a large user-receptacle under the outlet. For instance, the user-receptacle body is a body that is:
- vertically translatable between different positions for supporting user-recipients under the outlet, e.g. as disclosed in WO 2006/050769;
- movable within the machine from under the outlet between a first position for supporting a short user-recipient under the outlet and a second position position for leaving a free space for receiving a tall user-recipient under the outlet under the outlet, e.g. as disclosed in EP1867260, WO2009/074557, WO 2011/154492 and WO 2012/007313, the free space being either formed by a support surface of the machine (e.g. a machine foot) or a support surface external to the machine (e.g. a shelf, a kitchen or dining table or any generally stable and horizontal surface that is able to support the weight of the machine and the user-recipient); or
- removable from the machine (and reconnectable thereto) from a position for supporting a short user-recipient under the outlet to a position external to the machine for leaving a free space for receiving a tall user-recipient under the outlet under the outlet, e.g. as disclosed in EP1731065, WO 2013/104636, EP 2014198712.3 and EP 2014198715.6.

The machine can have a foot projecting in front of the external front face and extending along the external front face to form and/or support the front area.

The machine may include a movable user-receptacle support body that has an upper placement surface and that is movable along the external front face:
- from a first position at the front area under the outlet for supporting on the upper placement surface a short user-receptacle under the outlet;
- to a second position away from under the outlet so that a large user-receptacle is placeable on a lower placement surface under the outlet.

Optionally, the foot forms the lower placement surface and/or supports the movable user-receptacle support body in at least one of the first and second positions.

The movable user-receptacle support body can be secured to the external front face and/or to the above foot.

The machine may have a connection means for connecting the user-receptacle support body to the external front face. The user-receptacle support body can have a connector that is connected or connectable to the connection means to maintain the user-receptacle body in the first and second positions. The connection means may guide the user-receptacle body from the first position into the second position and vice versa.

Hence, the support body may be in connection with the connection means during the entire travel from the first position to the second position and vice versa. Consequently, the travel direction of the support body between the first and second positions can be entirely determined by the configuration of the connection means from the first to the second positions and vice versa.

The connection means can be located on the external front face and/or on the abovementioned foot.

The connection means can have a direction that extends generally along a bottom part of the external front face so that the user-receptacle support body is movable with its connector in connection with the connection means from the first position into the second position and vice versa along the direction extending along the bottom part. For instance, the direction of the connection means extends on: the bottom part of the external front face; and/or a front area formed by a machine foot projecting in front of the bottom part of the external front face and extending along the external front face.

The machine can have a machine bottom face and the direction of the connection means can be generally parallel to the bottom face.

The machine may have two external spaced-apart lateral side faces, the user-receptacle support body being movable with its connector in connection with the connection means from the first position into the second position and vice versa along the above direction from adjacent or close to one external lateral side face to adjacent or close to the other external lateral side face.

The connection means may be provided with a mechanical arrangement comprising at least one of:
- a rail cooperating with a rail connector of the support body and/or a groove cooperating with a groove connector of the support body, such as a rail slider and/or groove slider of the support body having a single degree of freedom along the rail and/or the groove when connected thereto, the rail and/or groove and the rail and/or groove slider having optionally a generally dovetail shape for cooperating together along a single degree of freedom;
- a belt or chain secured to the support body and movable along the external front face, such as a belt or chain in an open or closed loop; and
- a local releasable positioner for guiding the support body into the first position or second position, such as a plug-and-socket positioner or a hook positioner or a snap positioner.

The connection means can be provided with a magnetic arrangement so that the connection means and the connector are magnetically constrained.

The connector may include a magnetic field-generating element that is arranged to be magnetically constrained against a corresponding ferromagnetic element of the connection means.

The connection means can have a magnetic field-generating element that is arranged to be magnetically constrained against a corresponding ferromagnetic element of the connector.

The connection means can comprise a magnetic field-generating element that is arranged to be magnetically constrained against a corresponding magnetic field-generating element of the connector.

The magnetic field-generating element may include an electromagnet element or a permanent magnet element, e.g. made of at least one of iron, nickel, cobalt, rare earth metals, e.g. lanthanide, and alloys and oxides containing such metals as well as polymers (e.g. plastics) carrying such elements and components.

The ferromagnetic element can be made of at least one of of Co, Fe, Fe₂O₃, FeOFe₂O₃, NiOFe₂O₃, CuOFe₂O₃, MgO Fe₂O₃, Nd₂Fe₁₄B, Mn, Bi, Ni, MnSb, MnOFe₂O₃, Y₃Fe₅O₁₂, CrO₂, MnAs, Gd, Dy, EuO, Cu₂MnAl, Cu₂MnIn, Cu₂MnSn, Ni₂MnAl, Ni₂MnIn, Ni₂MnSn, Ni₂MnSb, Ni₂MnGa, Co₂MnAl, Co₂MnSi, Co₂MnGa, Co₂MnGe, SmCo₅, Sm₂Co₁₇, Pd₂MnAl, Pd₂MnIn, Pd₂MnSn, Pd₂MnSb, Co₂FeSi, Fe₃Si, Fe₂VAl, Mn₂VGa and Co₂FeGe.

Such magnetic field-generative element and/or such ferromagnetic element can be made of sub-elements dispersed in a polymer matrix or agglomerated with binder.

The connector can comprise one or more magnetic and/or ferromagnetic elements, e.g. pin or rod or cylinder or prism or spot element, the connection means comprising:
- one or more magnetic and/or ferromagnetic local positioner elements, e.g. pin or rod or cylinder or prism or spot element, on a path of the connector when the user-receptacle support body is moved between the first and second positions along the direction generally extending along the bottom part, such as at least one of discrete end-of-path positioners and intermediate positioners, e.g. a plurality of spaced apart positioners; and/or
- one or more path elements along a path of the connector when the user-receptacle support body is moved between the first and second positions along the above direction generally extending along the bottom part, optionally the connection means comprising stripe or bar or wire elements or a plurality of side-by-side local positioner elements along this direction to from a spotted path and/or end-of-path positioners defining the first and second positions of the user-receptacle support body.

The liquid reservoir can be removable from the machine for servicing, such as for filling, emptying and/or cleaning.

The liquid reservoir may be mounted on a machine foot, such as the abovementioned foot. The machine foot can project beyond:
- at least one of the external lateral side faces, the reservoir being located adjacent to the at least one of the external side faces;
- the external front face, the reservoir being located adjacent to the external front face; or
- the external rear face, the reservoir being located adjacent to the external rear face.

The liquid reservoir can have a shape that extends over substantially at least one of the entire external lateral side face and and/or over substantially the entire external rear face.

The liquid reservoir may have a shape that is generally parallelpipedic.

The liquid reservoir can have a shape that is generally cylindrical with a circular or part-circular or crescent or elliptic or semi-elliptic base.

The machine can include a seat for receiving a removable service unit via an opening in the external front face.

The service unit may comprise a receptacle for collecting waste material such as capsules upon use and/or residual liquid.

The service unit can have a feeder for supplying the beverage ingredient capsules and/or another ingredient for forming the beverage to be dispensed and/or a cleaning agent.

The service unit may be prevented from being removed or inserted into the seat by the above user-receptacle support body when the support body is adjacent to and in front of the opening:
- in the first position of the body, the service unit being removable or insertable into the seat when the support body is in the second position; or
- in the second position of the body, the service unit being removable or insertable into the seat when the support body is in the first position.

Examples of service units are disclosed in EP 1 731 065, EP 1 867 260, WO 2009/013778, WO 2009/074559, WO 2009/135869, WO 2010/128109, WO 2011/086087 and WO 2011/086088.

Hence, when the machine is mainly intended to be used for serving small beverages into short user-receptacle, the seat's opening for service unit may be located adjacent to and behind the support body in the first position, so that the service unit is prevented from being removed from the seat during the main use of the machine. Likewise, when the machine is mainly intended to be used for serving large beverages into short user-receptacle, the seat's opening for service unit may be located adjacent to and behind the support body in the second position, so that the service unit is prevented from being removed from the seat during the main use of the machine.

The capsule handling device can be so arranged as to evacuate the capsule to the removable service unit when located in the seat.

In the context of the present disclosure, the relative orientation of the machine, e.g. references to the machine's top, front, bottom, side, rear, etc., unless specified otherwise, typically relate to the orientation of operation of the machine, e.g. on top of a table, with the machine's outlet in front of a user for naturally operating the machine to dispense a beverage.

### Brief Description of the Drawings

The invention will now be described with reference to the schematic drawings, wherein:
- Figures 1 and 2 are front views of a beverage machine according to the invention having a beverage outlet and a cup support that is movable under the outlet for placing a small cup under the outlet and movable away from under the outlet for placing a large cup under the outlet as illustrated in Figs 1 and 2, respectively;
- Figures 3a to 3d illustrate schematically the operation and the fluid line of a capsule handling device of the machine of Figs 1 and 2;
- Figures 4 and 5 are side view of the beverage machine shown in Figs 1 and 2 with a service unit inserted into and removed from its machine as illustrated in Figs 4 and 5, respectively; and
- Figures 6 and 7 are top views of the beverage machine shown in Figs 1 and 2 with a cover for covering a capsule insertion opening, the cover being in the closed position over and across the opening and in the open position away from the opening, as illustrated in Figs 6 and 7, respectively.

### Detailed description

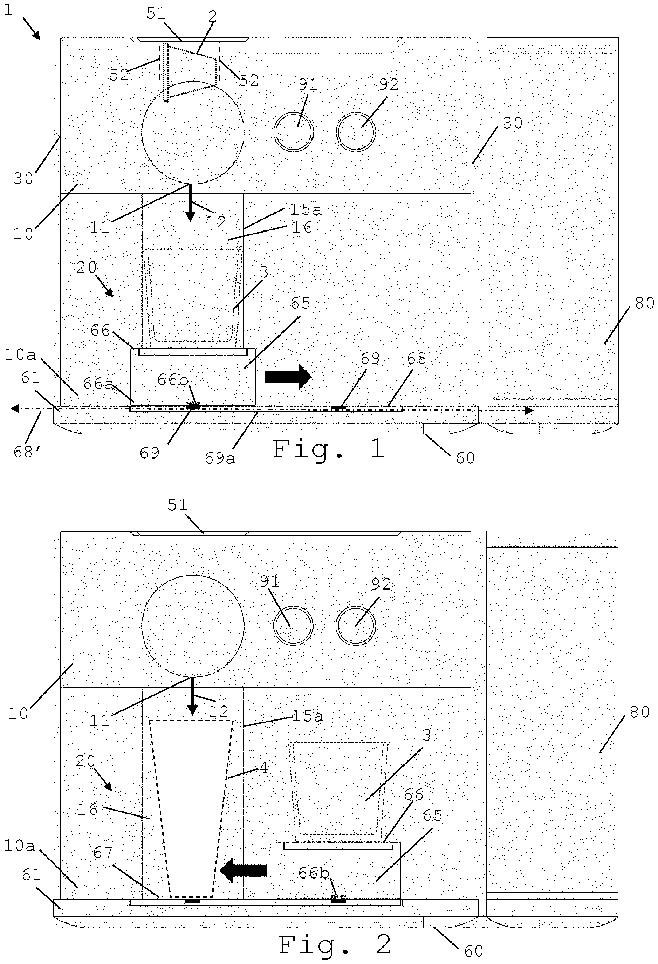

As illustrated in Figures 1 to 7, an exemplary embodiment of a machine 1 according to the invention is configured for dispensing a beverage 84 from a capsule 2 containing a beverage ingredient.

Machine 1 has an external housing 10,30,30',40,50,60 with an external front face 10. External housing 10,30,30',40,50,60 may include at least one of: one or more external lateral side faces 30,30'; an external rear face 40; an external top face 50; and an external bottom face 60.

Machine 1 comprises a beverage outlet 11 located on external front face 10 and above a front area 20 for placing a user-receptacle 3,4 for collecting beverage 84 dispensed from the outlet 11.

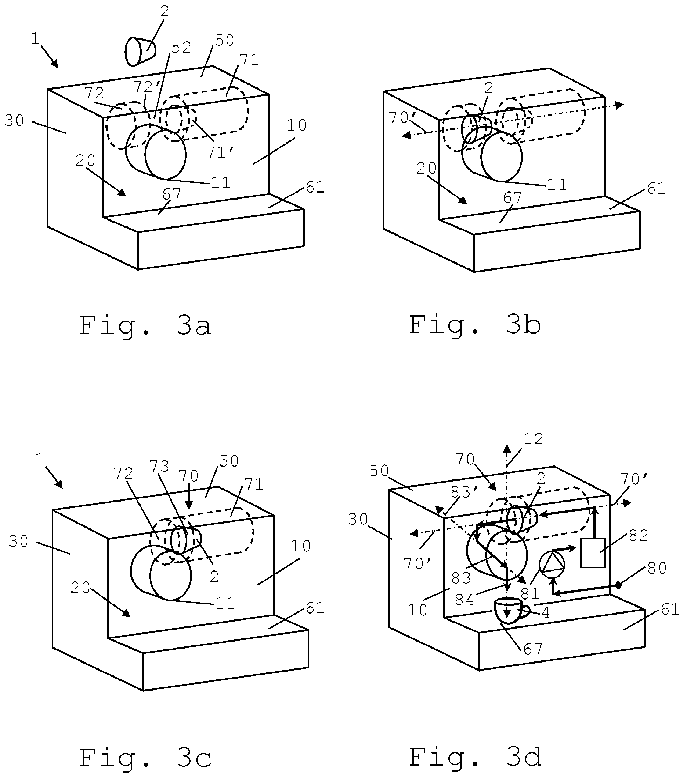

Machine 1 has a capsule handling device 70 that is located behind external front face 10 and that is fluidically connected to outlet 11 (Figs 3a-3d and Figs 6-7). Device 70 includes a first part 71 and a second part 72 (Fig. 3a) that are relatively movable between a transfer position (Figs 3a-3b) for receiving and/or evacuating capsule 2 and an extraction position (Figs 3c-2d) for extracting capsule 2 between first and second parts 71,72.

Machine 1 has an opening 51 in external housing 10, 30, 30', 40, 50, 60, such as in the external front or lateral or rear or top face 10,30,30',40,50 (when present), which opening 51 leads into a passage 52 for guiding capsule 2 to capsule handling device 70 with its parts 71,72 in the transfer position, which parts 71,72 are then relatively movable to their extraction position for extracting capsule 2.

Machine 1 includes a cover 55 that is movable adjacent to external housing 10,30,30',40,50,60, such as slidable and/or pivotable, between an open position away from opening 51 for allowing insertion of capsule 2 into passage 52 via opening 51 and a closed position over or across the opening 51 to prevent insertion of capsule 2 into passage 52 via opening 51. See Figs 1-2 and 6-7.

Machine 1 has a user-interface 90 which is operable by a user to extract capsule 2 between first and second parts 71,72 in their extraction position.

For instance, first and second parts 71,72 are movable manually, such as by a user-handle (e.g. as disclosed in WO 2005/004683 or WO 2007/135136), and/or movable automatically, such as by a motor (e.g. as disclosed in EP1767129 or WO 2012/025258), between the transfer and the extraction positions.

First and second parts 71,72 may be arranged to form in the extraction position a mixing chamber 73 for housing capsule 2 (Fig. 3c-3d), e.g. a brewing chamber 73. For instance, chamber 73 is delimited by at least a cavity 71' in one part 71 of first and second parts 71,72 and by a cooperating cavity or lid 72' formed by the other part 72 of first and second parts 71,72 (Fig. 3a).

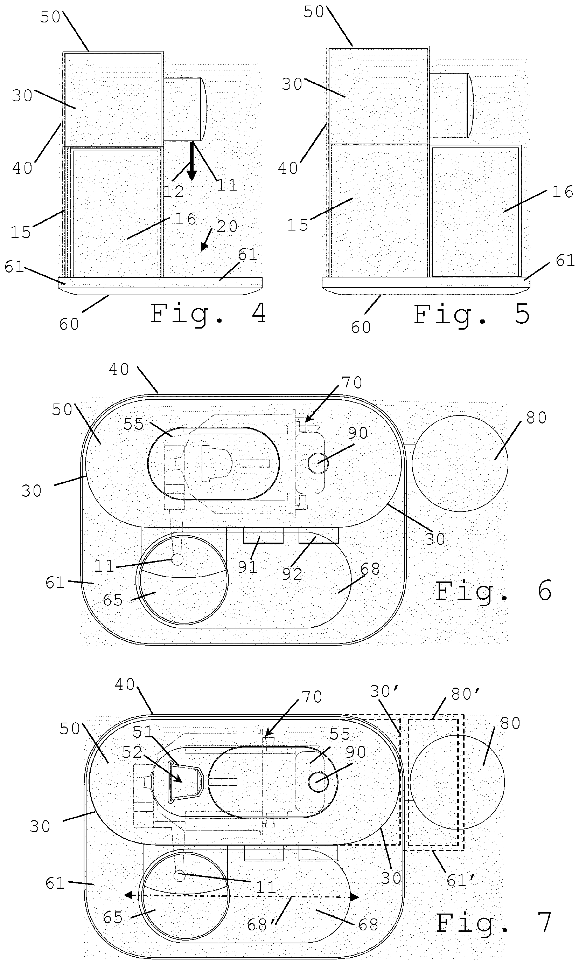

User-interface 90 is covered by the cover 55 when cover 55 is in the open position so that user-interface 90 is inoperable by a user when capsule handling device 70 is accessible from outside via opening 51 and passage 52. See Fig. 7.

User-interface 90 is uncovered by cover 55 when cover 55 is in the closed position so that user-interface 90 is operable by a user when capsule handling device 70 is inaccessible from outside via opening 51 and passage 52. See Fig. 6.

Machine 1 may include a fluid circuit for circulating beverage ingredient from capsule 2 when extracted between first and second parts 71,72. Fluid circuit can be fluidically connected to a source of liquid 80,80', such as a tank, and comprise a liquid driver 81, such as a pump, for driving liquid from source 80,80' into capsule handling device 70 for feeding the liquid to capsule 2, e.g. via a temperature conditioner (82), such as a heater and/or a cooler, and via an inlet of first or second part 71,72. See Fig. 3d.

User-interface 90 may be configured to control the liquid driver to drive liquid from the source of liquid 80,80' into capsule handling device 70. See Figs 6-7.

Machine 1 can have one or more further user-interfaces 91,92 such as further user-interfaces 91,92 for setting at least one parameter relating to beverage preparation, power management and machine servicing. Such beverage preparation parameters may relate to the beverage volumes, beverage temperatures as well as preparation sequences, such as beverages made of different phases such as more or less separate coffee and milk phases, e.g. cappuccinos and latte machiattos.

Machine 1 may include a fluid guide 83 for fluidically connecting capsule handling device 70 to outlet 11 along a guide direction 83', an overall direction of extraction 70' of the beverage ingredient in capsule 2 and a direction 12 of dispensing of beverage 84 out of outlet 11 extending along skew lines. For instance, dispensing direction 12 and guide direction 83' are in a plane that is generally orthogonal to the overall direction of extraction 70'. See Fig. 3d.

Machine 1 can include two external spaced-apart lateral side faces 30,30' that extend rearwards behind external front face 10 and that face each other. At least one part 72 of first and second parts 71,72 of capsule handling device 70 can be arranged to translate towards and away from at least one of the two external lateral side faces 30, 30' so that first and second parts 71,72 relatively move between the transfer and the extraction positions. See Figs 3a-3d. The at least one part 72 of first and second parts 71,72 that is arranged to translate towards and away from at least one of the two external lateral side faces 30,30' can be configured to move generally in parallel to at least one of: external front face 10; external rear face 40 (when present); external top face 50 (when present); and external bottom face 60 (when present).

First and second parts 71,72 can be relatively movable between a transfer position for receiving and/or evacuating capsule 2 and an extraction position for extracting capsule 2 between first and second parts 71,72 along a translation axis 70' that intercepts at least one of first and second external lateral side faces 30,30'. Translation axis 70' can extend generally in parallel to at least one of: external front face 10; external rear face 40 (when present); external top face 50 (when present); and external bottom face 60 (when present). See Figs 3b and 3d.

The at least one part 72 of first and second parts 71,72 that is arranged to translate towards and away from at least one of the two external lateral side faces 30,30' may be arranged to move generally in parallel to an overall direction of extraction 70' of the beverage ingredient in capsule 2 when extracted between first and second parts 71,72. See Figs 3b and 3d.

Front area 20 may include a support body 65 that is movable between a first position for placing a short user-receptacle 3 under outlet 11 and a second position for placing a large user-receptacle 4 under the outlet 11 (Figs 1 and 2).

Machine 1 may include a foot 61, 61' projecting in front of external front face 10 and extending along external front face 10 to form and/or support front area 20. See Figs 1-7.

Machine 1 may include a movable user-receptacle support body 65 that has an upper placement surface 66 and that is movable along external front face 10:
- from a first position at front area 20 under outlet 11 for supporting on upper placement surface 66 a short user-receptacle 3 under the outlet 11 (Figs 1, 6 and 7) ;
- to a second position away from under outlet 11 so that a large user-receptacle 4 is placeable on a lower placement surface 67 under outlet 11 (Fig. 2).

For instance foot 61,61' forms lower placement surface 67 and/or supports movable user-receptacle support body 65 in at least one of the first and second positions.

Movable user-receptacle support body 65 can be secured to external front face 10 and/or to foot 61,61'.

Machine 1 may include a connection means 68,69,69a for connecting user-receptacle support body 65 to external front face 10. User-receptacle support body 65 having a connector 66a,66b that is connected or connectable to connection means 68,69,69a to maintain user-receptacle body 65 in the first and second positions. For instance, connection means 68,69,69a guides user-receptacle body 65 from the first position into the second position and vice versa. See Figs 1, 6 and 7.

Connection means 68,69,69a can be located on external front face 10 and/or on foot 61,61' (Figs 1, 6 and 7).

Connection means 68, 69, 69a may have a direction 68' that extends generally along a bottom part 10a of external front face 10 so that user-receptacle support body 65 is movable with its connector 66a,66b in connection with connection means 68,69,69a from the first position into the second position and vice versa along direction 68' extending along bottom part 10a. For instance, direction 68' of connection means 68,69,69a extends on: the bottom part 10a of the external front face 10; and/or a front area 20 formed by a machine foot 61,61' projecting in front of bottom part 10a of external front face 10 and extending along external front face 10.

Machine 1 can have a machine bottom face 60, direction 68' of connection means 68, 69, 69a being generally parallel to bottom face 60 (Fig. 1).

Machine 1 may have two external spaced-apart lateral side faces 30,30', user-receptacle support body 65 being movable with its connector 66a,66b in connection with connection means 68,69,69a from the first position into the second position and vice versa along direction 68' from adjacent or close to one external lateral side face 30 to adjacent or close to the other external lateral side face 30 (Figs 1 and 7).

Connection means 68,69,69a may be provided with a mechanical arrangement comprising at least one of:
- a rail cooperating with a rail connector of the support body 65 and/or a groove 68 cooperating with a groove connector 66a of the support body 65, such as a rail slider and/or groove slider 66a of support body 65 having a single degree of freedom along the rail and/or the groove when connected thereto (Figs 1, 6 and 7), the rail and/or groove and the rail and/or groove slider having optionally a generally dovetail shape for cooperating together along a single degree of freedom;
- a belt or chain secured to the support body and movable along the external front face, such as a belt or chain in an open or closed loop; and
- a local releasable positioner for guiding the support body 65 into the first position or second position, such as a plug-and-socket positioner or a hook positioner or a snap positioner.

Connection means 69,69a can be provided with a magnetic arrangement so that connection means 69,69a and connector 66b are magnetically constrained (Figs 1, 6 and 7) .

Connector 66b may include a magnetic field-generating element that is arranged to be magnetically constrained against a corresponding ferromagnetic element of the connection means 68,69a.

Connection means 68,69a can have a magnetic field-generating element that is arranged to be magnetically constrained against a corresponding ferromagnetic element of the connector 66b.

Connection means 68,69a may have a magnetic field-generating element that is arranged to be magnetically constrained against a corresponding magnetic field-generating element of the connector 66b.

Such magnetic field-generating element may include an electromagnet element or a permanent magnet element, e.g. made of at least one of iron, nickel, cobalt, rare earth metals, e.g. lanthanide, and alloys and oxides containing such metals as well as polymers (e.g. plastics) carrying such elements and components.

Such ferromagnetic element can be made of at least one of of Co, Fe, Fe₂O₃, FeOFe₂O₃, NiOFe₂O₃, CuOFe₂O₃, MgO Fe₂O₃, Nd₂Fe₁₄B, Mn, Bi, Ni, MnSb, MnOFe₂O₃, Y₃Fe₅O₁₂, CrO₂, MnAs, Gd, Dy, EuO, Cu₂MnAl, Cu₂MnIn, Cu₂MnSn, Ni₂MnAl, Ni₂MnIn, Ni₂MnSn, Ni₂MnSb, Ni₂MnGa, Co₂MnAl, Co₂MnSi, Co₂MnGa, Co₂MnGe, SmCo₅, Sm₂Co₁₇, Pd₂MnAl, Pd₂MnIn, Pd₂MnSn, Pd₂MnSb, Co₂FeSi, Fe₃Si, Fe₂VAl, Mn₂VGa and Co₂FeGe.

Such magnetic field-generative element and/or such ferromagnetic element can be made of sub-elements dispersed in a polymer matrix or agglomerated with binder.

The connector can have one or more magnetic and/or ferromagnetic elements 66b (Figs 1-2), e.g. pin or rod or cylinder or prism or spot element, the connection means comprising:
- one or more magnetic and/or ferromagnetic local positioner elements 69a, e.g. pin or rod or cylinder or prism or spot element, on a path of connector 66b when user-receptacle support body 65 is moved between the first and second positions along direction 68' generally extending along bottom part 10a, such as at least one of discrete end-of-path positioners and intermediate positioners, e.g. a plurality of spaced apart positioners; and/or
- one or more path elements along a path of connector 66b when user-receptacle support body 65 is moved between first and second positions along direction 68' generally extending along the bottom part 10a, optionally the connection means 69,69a comprising stripe or bar or wire elements or a plurality of side-by-side local positioner elements 69 along direction 68' to from a spotted path and/or end-of-path positioners 69 defining the first and second positions of user-receptacle support body 65.

Machine 1 may include a liquid reservoir 80,80', such as a water thank, the liquid reservoir being in fluid connection with the fluid circuit (Figs 1-2 and 6-7).

Liquid reservoir 80,80' can be removable from such machine 1 for servicing, such as for filling, emptying and/or cleaning.

Liquid reservoir 80,80' may be mounted on a machine foot 61' (Fig. 7 in dashed lines), which machine foot 61' projects beyond:
- at least one of the external lateral side faces 30', reservoir 80' being located adjacent to at least one of the external side faces 30';
- the external front face, the reservoir being located adjacent to the external front face; or
- the external rear face, the reservoir being located adjacent to the external rear face.

Liquid reservoir 80,80' can have a shape that extends over substantially at least one of the entire external lateral side face 30' and and/or over substantially the entire external rear face (Fig. 7).

The shape of liquid reservoir 80' may be generally parallelpipedic (Fig. 7 in dashed lines).

Liquid reservoir 80 may have a shape that is generally cylindrical with a circular or part-circular or crescent or elliptic or semi-elliptic base (Fig. 6-7).

Machine 1 can have a seat 15 for receiving a removable service unit 16 via an opening 15a in external front face 10 (Figs 1-2 and 4-5).

Service unit 16 may have a receptacle for collecting waste material, such as capsules 2 upon use, and/or residual liquid.

Service unit 16 can have a feeder for supplying the beverage ingredient capsules and/or another ingredient for forming the beverage to be dispensed and/or a cleaning agent.

Service unit 16 may be prevented from being removed or inserted into seat 15 by user-receptacle support body 65 when support body 65 is adjacent to and in front of the opening 15a (Figs 1-2 and 4-5):
- in the first position of body 15a, service unit 16 being removable or insertable into seat 15 when support body 65 is in the second position; or
- in the second position of body 15a, service unit 16 being removable or insertable into seat 15 when support body 65 is in the first position.

## Claims

1. A machine (1) for dispensing a beverage (84) from a capsule (2) containing a beverage ingredient, comprising:
- an external housing (10,30,30',40,50,60) having an external front face (10) and optionally at least one of: one or more external lateral side faces (30,30'); an external rear face (40); an external top face (50); and an external bottom face (60);
- a beverage outlet (11) located on the external front face (10) and above a front area (20) for placing a user-receptacle (3,4) for collecting beverage (84) dispensed from the outlet (11);
- a capsule handling device (70) that is located in the housing (10,30,30',40,50,60) and that is fluidically connected to the beverage outlet (11) and that has a first part (71) and a second part (72) that are relatively movable between a transfer position for receiving and/or evacuating said capsule (2) and an extraction position for extracting said capsule (2) between the first and second parts (71,72);
- an opening (51) in the external housing (10, 30, 30', 40, 50, 60), such as in said external front or lateral or rear or top face (10,30,30',40,50), which opening (51) leads into a passage (52) for guiding said capsule (2) to the capsule handling device (70) with its parts in the transfer position, which parts are then relatively movable to their extraction position for extracting said capsule (2);
- a cover (55) that is movable adjacent to the external housing (10,30,30',40,50,60), such as slidable and/or pivotable, between an open position away from the opening (51) for allowing insertion of said capsule into the passage (52) via the opening (51) and a closed position over or across the opening (51) to prevent insertion of said capsule (2) into the passage (52) via the opening (51); and
- a user-interface (90) which is operable by a user to extract said capsule (2) between the first and second parts (71,72) in their extraction position,
optionally the first and second parts (71,72) being:
- movable manually, such as by a user-handle, and/or movable automatically, such as by a motor, between the transfer and the extraction positions; and/or
- arranged to form in the extraction position a mixing chamber (73) for housing said capsule (2), e.g. a brewing chamber (73), such as a chamber delimited by at least a cavity (71') in one (71) of said first and second parts (71,72) and by a cooperating cavity or lid (72') formed by the other (72) of said first and second parts (71,72),
**characterised in that** the user-interface (90) is:
- covered by the cover (55) when the cover is in the open position so that the user-interface is inoperable by said user when the capsule handling device (70) is accessible from outside via the opening (51) and the passage (52); and
- uncovered by the cover (55) when the cover is in the closed position so that the user-interface is operable by said user when the capsule handling device (70) is inaccessible from outside via the opening (51) and the passage (52).

2. The machine of claim 1, which comprises a fluid circuit for circulating beverage ingredient from said capsule (2) when extracted between the first and second parts (71,72), the fluid circuit being fluidically connected to a source of liquid (80,80'), such as a water thank, and comprising a liquid driver (81), such as a pump, for driving said liquid from the source (80,80') into the capsule handling device (70) for feeding said liquid to said capsule (2), for instance via a temperature conditioner (82), such as a heater and/or a cooler, and via an inlet of the first or second part (71,72).

3. The machine of claim 2, wherein the user-interface (90) is configured to control the liquid driver to drive said liquid from the source of liquid (80, 80') into the capsule handling device (70), optionally such machine (1) comprising one or more further user-interfaces (91,92) such as further user-interfaces (91,92) for setting at least one parameter relating to beverage preparation, power management and machine servicing.

4. The machine of any preceding claim, which comprises a fluid guide (83) for fluidically connecting the capsule handling device (70) to the outlet (11) along a guide direction (83'), an overall direction of extraction (70') of said beverage ingredient in said capsule (2) and a direction (12) of dispensing of said beverage (84) out of the outlet (11) extending along skew lines, optionally the dispensing direction (12) and the guide direction (83') being in a plane that is generally orthogonal to the overall direction of extraction (70').

5. The machine of any preceding claim, which comprises two external spaced-apart lateral side faces (30,30') that extend rearwards behind the external front face (10) and that face each other and wherein at least one (72) of the first and second parts (71,72) of the capsule handling device (70) is arranged to translate towards and away from at least one of the two external lateral side faces (30,30') so that the first and second parts (71,72) relatively move between the transfer and the extraction positions.

6. The machine of claim 5, wherein said at least one (72) of the first and second parts (71,72) that is arranged to translate towards and away from said at least one of the two external lateral side faces (30, 30') is configured to move generally in parallel to at least one of: the external front face (10); said external rear face (40); said external top face (50); and said external bottom face (60).

7. The machine of claim 5 or 6, wherein the first and second parts (71,72) are relatively movable between a transfer position for receiving and/or evacuating said capsule (2) and an extraction position for extracting said capsule (2) between the first and second parts (71,72) along a translation axis (70') that intercepts at least one of the first and second external lateral side faces (30,30'), the translation axis (70') extending optionally generally in parallel to at least one of: the external front face (10); said external rear face (40); said external top face (50); and said external bottom face (60).

8. The machine of any one of claims 5 to 7, wherein said at least one (72) of the first and second parts (71,72) that is arranged to translate towards and away from said at least one of the two external lateral side faces (30,30') is arranged to move generally in parallel to an overall direction of extraction (70') of said beverage ingredient in said capsule (2) when extracted between the first and second parts (71,72).

9. The machine of any preceding claim, wherein the front area (20) comprises a movable user-receptacle support body (65), such as a support body (65) that is movable between a first position for placing a short user-receptacle (3) under the outlet (11) and a second position for placing a large user-receptacle (4) under the outlet (11).

10. The machine of any preceding claim, which comprises a foot (61,61') projecting in front of the external front face (10) and extending along the external front face (10) to form and/or support the front area (20).

11. The machine of any preceding claim, which comprises a movable user-receptacle support body (65) that has an upper placement surface (66) and that is movable along the external front face (10):
- from first position at the front area (20) under the outlet (11) for supporting on the upper placement surface (66) a short user-receptacle (3) under the outlet (11);
- to a second position away from under the outlet (11) so that a large user-receptacle (4) is placeable onto on a lower placement surface (67) under the outlet (11),
optionally said foot (61,61') of claim 10 forming the lower placement surface (67) and/or supporting the movable user-receptacle support body (65) in at least one of the first and second positions.

12. The machine of claim 11, wherein the movable user-receptacle support body (65) is secured to the external front face (10) and/or to said foot (61,61') of claim 10.

13. The machine of claim 11 or 12, which comprises a connection means (68,69,69a) for connecting the user-receptacle support body (65) to the external front face (10), the user-receptacle support body (65) having a connector (66a,66b) that is connected or connectable to the connection means (68,69,69a) to maintain the user-receptacle body (65) in the first and second positions, and for instance to guide the user-receptacle body (65) from the first position into the second position and vice versa, optionally the connection means (68) being:
A) located on the external front face (10) and/or on said foot (61,61') of claim 10;
B) provided with a direction (68') that extends generally along a bottom part (10a) of the external front face (10) so that the user-receptacle support body (65) is movable with its connector (66a,66b) in connection with the connection means (68, 69, 69a) from the first position into the second position and vice versa along said direction (68') extending along the bottom part (10a), optionally the direction (68') of the connection means (68,69,69a) extending on:
- the bottom part (10a) of the external front face (10); and/or
- a front area (20) formed by a machine foot (61,61') projecting in front of the bottom part (10a) of the external front face (10) and extending along the external front face (10);
C) provided with a mechanical arrangement comprising at least one of:
- a rail cooperating with a rail connector of the support body (65) and/or a groove (68) cooperating with a groove connector (66a) of the support body (65), such as a rail slider and/or groove slider (66a) of the support body having a single degree of freedom along the rail and/or the groove when connected thereto, the rail and/or groove and the rail and/or groove slider having optionally a generally dovetail shape for cooperating together along a single degree of freedom;
- a belt or chain secured to the support body and movable along the external front face, such as a belt or chain in an open or closed loop; and
- a local releasable positioner for guiding the support body (65) into the first position or second position, such as a plug-and-socket positioner or a hook positioner or a snap positioner;
D) provided with a magnetic arrangement so that the connection means (69,69a) and the connector (66b) are magnetically constrained, optionally:
- the connector (66b) comprising a magnetic field-generating element that is arranged to be magnetically constrained against a corresponding ferromagnetic element of the connection means (68,69a); or
- the connection means (68,69a) comprising a magnetic field-generating element that is arranged to be magnetically constrained against a corresponding ferromagnetic element of the connector (66b); or
- the connection means (68, 69a) comprising a magnetic field-generating element that is arranged to be magnetically constrained against a corresponding magnetic field-generating element of the connector (66b);
for instance:
- the magnetic field-generating element comprising an electromagnet element or a permanent magnet element, e.g. made of at least one of iron, nickel, cobalt, rare earth metals, e.g. lanthanide, and alloys and oxides containing such metals as well as polymers (e.g. plastics) carrying such elements and components; and/or
- the ferromagnetic element being made of at least one of of Co, Fe, Fe₂O₃, FeOFe₂O₃, NiOFe₂O₃, CuOFe₂O₃, MgO Fe₂O₃, Nd₂Fe₁₄B, Mn, Bi, Ni, MnSb, MnOFe₂O₃, Y₃Fe₅O₁₂, CrO₂, MnAs, Gd, Dy, EuO, Cu₂MnAl, Cu₂MnIn, Cu₂MnSn, Ni₂MnAl, Ni₂MnIn, Ni₂MnSn, Ni₂MnSb, Ni₂MnGa, Co₂MnAl, Co₂MnSi, Co₂MnGa, Co₂MnGe, SmCo₅, Sm₂Co₁₇, Pd₂MnAl, Pd₂MnIn, Pd₂MnSn, Pd₂MnSb, Co₂FeSi, Fe₃Si, Fe₂VAl, Mn₂VGa and Co₂FeGe;
or
E) a combination of two or more of features A), B), C) and D).

14. The machine of claim 2 or any one of claims 3 to 13 when depending thereon, wherein the liquid reservoir (80,80') is:
- removable from such machine (1) for servicing, such as for filling, emptying and/or cleaning; and/or
- mounted on a machine foot (61'), such as said foot (61') of claim 10, the machine foot (61') projecting beyond:
- at least one of the external lateral side faces (30'), the reservoir (80') being located adjacent to said at least one of the external side faces;
- the external front face, the reservoir being located adjacent to the external front face; or
- said external rear face, the reservoir being located adjacent to said external rear face,
optionally, the liquid reservoir (80,80') having a shape that:
A) extends over substantially at least one of the entire external lateral side face (30,30') and and/or over substantially the entire external rear face;
B) is generally parallelpipedic;
C) is generally cylindrical with a circular or part-circular or crescent or elliptic or semi-elliptic base; or
D) combines at least two of features A), B) and C).

15. The machine of any preceding claim, which has a seat (15) for receiving a removable service unit (16) via an opening (15a) in the external front face (10), optionally the service unit (16):
- comprising a receptacle for collecting waste material such as capsules (2) upon use and/or residual liquid; and/or
- comprising a feeder for supplying said beverage ingredient capsules (2) and/or another ingredient for forming said beverage (84) to be dispensed and/or a cleaning agent; and/or
- being prevented from being removed or inserted into the seat (15) by the user-receptacle support body (65) when the body (65) is adjacent to and in front of the opening (15a):
- in the first position of the body (15a), the service unit (16) being removable or insertable into the seat (15) when the support body (65) is in the second position; or
- in the second position of the body (15a), the service unit (16) being removable or insertable into the seat (15) when the support body (65) is in the first position.

## Patentansprüche

1. Maschine (1) zum Ausgeben eines Getränks (84) aus einer einen Getränkebestandteil enthaltenden Kapsel (2), umfassend:
- ein äußeres Gehäuse (10, 30, 30', 40, 50, 60) mit einer äußeren vorderen Fläche (10) und optional mindestens einem von: einer oder mehreren äußeren lateralen Seitenflächen (30, 30'); einer äußeren hinteren Fläche (40); einer äußeren oberen Fläche (50); und einer äußeren unteren Fläche (60);
- einen Getränkeauslass (11), der auf der äußeren vorderen Fläche (10) und über einem vorderen Bereich (20) angeordnet ist, um einen Benutzerbehälter (3, 4) zum Aufnehmen von Getränken (84), die aus dem Auslass (11) ausgegeben werden, zu platzieren;
- eine Kapselhandhabungsvorrichtung (70), die im Gehäuse (10, 30, 30', 40, 50, 60) angeordnet ist und die mit dem Getränkeauslass (11) in Fluidverbindung steht und die einen ersten Teil (71) und einen zweiten Teil (72) aufweist, die relativ bewegbar sind zwischen einer Überführungsposition zum Empfangen und/oder Abführen der Kapsel (2) und einer Extraktionsposition zum Extrahieren der Kapsel (2) zwischen dem ersten und zweiten Teil (71, 72);
- eine Öffnung (51) im äußeren Gehäuse (10, 30, 30', 40, 50, 60), wie beispielsweise in der äußeren vorderen oder lateralen oder hinteren oder oberen Fläche (10, 30, 30', 40, 50), wobei die Öffnung (51) in einen Durchgang (52) führt zum Führen der Kapsel (2) zur Kapselhandhabungsvorrichtung (70), deren Teile in der Überführungsposition sind, wobei die Teile dann relativ bewegbar sind in ihre Extraktionsposition zum Extrahieren der Kapsel (2);
- eine Abdeckung (55), die angrenzend an das äußere Gehäuse (10, 30, 30', 40, 50, 60) zwischen einer offenen Position weg von der Öffnung (51), um das Einsetzen der Kapsel in den Durchgang (52) über die Öffnung (51) zu ermöglichen, und einer geschlossenen Position oberhalb oder über der Öffnung (51), um das Einsetzen der Kapsel (2) in den Durchgang (52) über die Öffnung (51) zu verhindern, bewegbar, wie beispielsweise verschiebbar und/oder verschwenkbar ist; und
- eine Benutzerschnittstelle (90), die von einem Benutzer betätigbar ist, um die Kapsel (2) zwischen dem ersten und zweiten Teil (71, 72) in deren Extraktionsposition zu extrahieren,
wobei optional der erste und zweite Teil (71, 72) Folgendes sind:
- manuell, beispielsweise durch einen Benutzerhandgriff, und/oder automatisch, beispielsweise durch einen Motor, bewegbar zwischen der Überführungs- und der Extraktionsposition; und/oder
- angeordnet, um in der Extraktionsposition eine Mischkammer (73) zur Aufnahme der Kapsel (2) zu bilden, z.B. eine Brühkammer (73), wie beispielsweise eine Kammer, die durch einen Hohlraum (71') in einem (71) vom ersten und zweiten Teil (71, 72) und/oder durch einen zusammenwirkenden Hohlraum oder Deckel (72'), der durch den anderen (72) vom ersten und zweiten Teil (71, 72) gebildet wird, begrenzt wird,
**dadurch gekennzeichnet, dass** die Benutzerschnittstelle (90) Folgendes ist:
- abgedeckt von der Abdeckung (55), wenn die Abdeckung in der offenen Position ist, so dass die Benutzerschnittstelle für den Benutzer unbetätigbar ist, wenn die Kapselhandhabungsvorrichtung (70) von außen über die Öffnung (51) und den Durchgang (52) zugänglich ist; und
- unbedeckt von der Abdeckung (55), wenn die Abdeckung in der geschlossenen Position ist, so dass die Benutzerschnittstelle für den Benutzer betätigbar ist, wenn die Kapselhandhabungsvorrichtung (70) von außen über die Öffnung (51) und den Durchgang (52) unzugänglich ist.

2. Maschine nach Anspruch 1, die einen Fluidkreislauf zum Umwälzen von Getränkebestandteilen aus der Kapsel (2) bei der Extraktion zwischen dem ersten und zweiten Teil (71, 72) umfasst, wobei der Fluidkreislauf mit einer Flüssigkeitsquelle (80, 80'), wie beispielsweise einem Wassertank, in Fluidverbindung steht und einen Flüssigkeitstreiber (81) umfasst, wie eine Pumpe, zum Treiben der Flüssigkeit aus der Quelle (80, 80') in die Kapselhandhabungsvorrichtung (70) zum Zuführen der Flüssigkeit zu der Kapsel (2), zum Beispiel über einen Temperaturkonditionierer (82), wie beispielsweise einen Erhitzer und/oder einen Kühler, und über einen Einlass des ersten oder zweiten Teils (71, 72).

3. Maschine nach Anspruch 2, wobei die Benutzerschnittstelle (90) dazu eingerichtet ist, den Flüssigkeitstreiber zum Treiben der Flüssigkeit aus der Flüssigkeitsquelle (80, 80') in die Kapselhandhabungsvorrichtung (70) zu steuern, wobei eine solche Maschine optional (1) eine oder mehrere weitere Benutzerschnittstellen (91, 92) umfasst, beispielsweise weitere Benutzerschnittstellen (91, 92) zur Einstellung mindestens eines Parameters in Bezug auf die Getränkezubereitung, das Energiemanagement und die Maschinenwartung.

4. Maschine nach einem der vorhergehenden Ansprüche, die eine Fluidführung (83) zum fluidischen Verbinden der Kapselhandhabungsvorrichtung (70) mit dem Auslass (11) entlang einer Führungsrichtung (83'), einer allgemeinen Extraktionsrichtung (70') des Getränkebestandteils in der Kapsel (2) und einer Ausgaberichtung (12) des Getränks (84) aus dem Auslass (11), die sich entlang schräger Linien erstreckt, umfasst, wobei optional die Ausgaberichtung (12) und die Führungsrichtung (83') in einer Ebene liegen, die im Allgemeinen orthogonal zur allgemeinen Extraktionsrichtung (70') ist.

5. Maschine nach einem der vorhergehenden Ansprüche, die zwei äußere, beabstandete laterale Seitenflächen (30, 30') umfasst, die sich hinter der äußeren vorderen Fläche (10) nach hinten erstrecken und einander zugewandt sind, und wobei mindestens einer (72) vom ersten und zweiten Teil (71, 72) der Kapselhandhabungsvorrichtung (70) so angeordnet ist, dass er sich in Richtung zu und weg von mindestens einer der beiden äußeren lateralen Flächen (30, 30') verschiebt, so dass sich der erste und zweite Teil (71, 72) relativ zwischen der Überführungs- und der Extraktionsposition bewegen.

6. Maschine nach Anspruch 5, wobei der mindestens eine (72) vom ersten und zweiten Teil (71, 72), der so angeordnet ist, dass er sich in Richtung zu und weg von der mindestens einen der beiden äußeren lateralen Flächen (30, 30') verschiebt, dazu eingerichtet ist, sich im Allgemeinen parallel zu mindestens einer der Folgenden zu bewegen: der äußeren vorderen Fläche (10); der äußeren hinteren Fläche (40); der äußeren oberen Fläche (50); und der äußeren unteren Fläche (60).

7. Maschine nach Anspruch 5 oder 6, wobei der erste und der zweite Teil (71, 72) relativ bewegbar sind zwischen einer Überführungsposition zum Empfangen und/oder Abführen der Kapsel (2) und einer Extraktionsposition zum Extrahieren der Kapsel (2) zwischen dem ersten und zweiten Teil (71, 72) entlang einer Verschiebungsachse (70'), die mindestens eine der ersten und zweiten äußeren lateralen Flächen (30, 30') schneidet, wobei sich die Verschiebungsachse (70') optional im Allgemeinen parallel zu mindestens einer der Folgenden erstreckt: der äußeren vorderen Fläche (10); der äußeren hinteren Fläche (40); der äußeren oberen Fläche (50); und der äußeren unteren Fläche (60).

8. Maschine nach einem der Ansprüche 5 bis 7, wobei der mindestens eine (72) vom ersten und zweiten Teil (71, 72), der so angeordnet ist, dass er sich in Richtung zu und weg von der mindestens einen der beiden äußeren lateralen Flächen (30, 30') verschiebt, so angeordnet ist, dass er sich zwischen dem ersten und zweiten Teil (71, 72) im Allgemeinen parallel zu einer allgemeinen Extraktionsrichtung (70') des Getränkebestandteils in der Kapsel (2) bewegt, wenn diese extrahiert wird.

9. Maschine nach einem der vorhergehenden Ansprüche, wobei der vordere Bereich (20) einen bewegbaren Trägerkörper (65) des Benutzerbehälters umfasst, wie beispielsweise einen Trägerkörper (65), der zwischen einer ersten Position zum Platzieren eines niedrigen Benutzerbehälters (3) unter dem Auslass (11) und einer zweiten Position zum Platzieren eines hohen Benutzerbehälters (4) unter dem Auslass (11) bewegbar ist.

10. Maschine nach einem der vorhergehenden Ansprüche, die einen Fuß (61, 61') umfasst, der vor der äußeren vorderen Fläche (10) vorsteht und sich entlang der äußeren vorderen Fläche (10) erstreckt, um den vorderen Bereich (20) zu bilden und/oder zu tragen.

11. Maschine nach einem der vorhergehenden Ansprüche, die einen bewegbaren Trägerkörper (65) für einen Benutzerbehälter umfasst, der eine obere Abstellfläche (66) aufweist und entlang der äußeren vorderen Fläche (10) bewegbar ist:
- aus der ersten Position im vorderen Bereich (20) unter dem Auslass (11) zum Tragen eines niedrigen Benutzerbehälters (3) unter dem Auslass (11) auf der oberen Abstellfläche (66);
- in eine zweite Position weg von unterhalb des Auslasses (11), so dass ein hoher Benutzerbehälter (4) auf einer unteren Abstellfläche (67) unter dem Auslass (11) platzierbar ist,
wobei der Fuß (61, 61') nach Anspruch 10 optional die untere Abstellfläche (67) bildet und/oder den bewegbaren Trägerkörper (65) für den Benutzerbehälter in mindestens einer der ersten und zweiten Positionen trägt.

12. Maschine nach Anspruch 11, wobei der bewegbare Trägerkörper (65) für den Benutzerbehälter an der äußeren vorderen Fläche (10) und/oder an dem Fuß (61, 61') nach Anspruch 10 befestigt ist.

13. Maschine nach Anspruch 11 oder 12, die ein Verbindungsmittel (68, 69, 69a) zum Verbinden des Trägerkörpers (65) für den Benutzerbehälter mit der äußeren vorderen Fläche (10) umfasst, wobei der Trägerkörper (65) für den Benutzerbehälter einen Verbinder (66a, 66b) aufweist, der mit dem Verbindungsmittel (68, 69, 69a) verbunden oder verbindbar ist, um den Trägerkörper (65) für den Benutzerbehälter in der ersten und zweiten Position zu halten und beispielsweise den Trägerkörper (65) für den Benutzerbehälter von der ersten Position in die zweite Position und umgekehrt zu führen, wobei optional das Verbindungsmittel (68) Folgendes ist:
A) angeordnet auf der äußeren vorderen Fläche (10) und/oder auf dem Fuß (61, 61') nach Anspruch 10;
B) versehen mit einer Richtung (68'), die sich im Allgemeinen entlang eines unteren Teils (10a) der äußeren vorderen Fläche (10) erstreckt, so dass der Trägerkörper (65) für den Benutzerbehälter mit seinem Verbinder (66a, 66b) in Verbindung mit dem Verbindungsmittel (68, 69, 69a) von der ersten Position in die zweite Position und umgekehrt entlang der sich entlang des unteren Teils (10a) erstreckenden Richtung (68') bewegbar ist, wobei sich optional die Richtung (68') des Verbindungsmittels (68, 69, 69a) erstreckt auf:
- dem unteren Teil (10a) der äußeren vorderen Fläche (10); und/oder
- einem vorderen Bereich (20), der durch einen Maschinenfuß (61, 61') gebildet ist, der vor dem unteren Teil (10a) der äußeren vorderen Fläche (10) vorsteht und sich entlang der äußeren vorderen Fläche (10) erstreckt;
C) versehen mit einer mechanischen Anordnung, umfassend mindestens eines von:
- einer Schiene, die mit einem Schienenverbinder des Trägerkörpers (65) zusammenwirkt, und/oder einer Nut (68), die mit einem Nutverbinder (66a) des Trägerkörpers (65) zusammenwirkt, wie beispielsweise einem Schienengleiter und/oder Nutengleiter (66a) des Trägerkörpers, der einen einzigen Freiheitsgrad entlang der Schiene und/oder der Nut aufweist, wenn er damit verbunden ist, wobei die Schiene und/oder Nut und der Schienen- und/oder Nutgleiter optional eine im Allgemeinen schwalbenschwanzförmige Form aufweisen, um entlang eines einzigen Freiheitsgrades zusammenzuwirken;
- einem Riemen oder einer Kette, der bzw. die am Trägerkörper befestigt und entlang der äußeren Vorderseite bewegbar ist, wie beispielsweise einem Riemen oder einer Kette in einer offenen oder geschlossenen Schleife; und
- einem lokalen lösbaren Positionierer zum Führen des Trägerkörpers (65) in die erste Position oder die zweite Position, wie beispielsweise einem Steckpositionierer oder einem Hakenpositionierer oder einem Schnapppositionierer;
D) versehen mit einer magnetischen Anordnung, so dass das Verbindungsmittel (69, 69a) und der Verbinder (66b) magnetisch gehalten werden, wobei optional:
- der Verbinder (66b) ein Magnetfelderzeugungselement umfasst, das so angeordnet ist, dass es magnetisch gegen ein entsprechendes ferromagnetisches Element des Verbindungsmittels (68, 69a) gehalten wird; oder
- das Verbindungsmittel (68, 69a) ein Magnetfelderzeugungselement umfasst, das so angeordnet ist, dass es magnetisch gegen ein entsprechendes ferromagnetisches Element des Verbinders (66b) gehalten wird; oder
- das Verbindungsmittel (68, 69a) ein Magnetfelderzeugungselement umfasst, das so angeordnet ist, dass es magnetisch gegen ein entsprechendes Magnetfelderzeugungselement des Verbinders (66b) gehalten wird;
wobei zum Beispiel:
- das Magnetfelderzeugungselement ein Elektromagnetelement oder ein Permanentmagnetelement umfasst, z.B. aus mindestens einem der Metalle Eisen, Nickel, Kobalt, Seltene Erden, z.B. Lanthanid und Legierungen und Oxiden, die solche Metalle enthalten, sowie Polymeren (z.B. Kunststoffe), die solche Elemente und Komponenten tragen, besteht; und/oder
- das ferromagnetische Element gebildet ist aus mindestens einem von Co, Fe, Fe₂O₃, FeOFe₂O₃, NiOFe₂O₃, CuOFe₂O₃, MgO, Fe₂O₃, Nd₂Fe₁₄B, Mn, Bi, Ni, MnSb, MnOFe₂O₃, Y₃Fe₅O₁₂, CrO₂, MnAs, Gd, Dy, EuO, Cu₂MnAl, Cu₂MnIn, Cu₂MnSn, Ni₂MnAl, Ni₂MnIn, Ni₂MnSn, Ni₂MnSb, Ni₂MnGa, Co₂MnAl, Co₂MnSi, Co₂MnGa, Co₂MnGe, SmCos, Sm₂Co₁₇, Pd₂MnAl, Pd₂MnIn, Pd₂MnSn, Pd₂MnSb, Co₂FeSi, Fe₃Si, Fe₂VAl, Mn₂Vga und Co₂FeGe;
oder
E) eine Kombination von zwei oder mehreren der Merkmale A), B), C) und D).

14. Maschine nach Anspruch 2 oder einem der Ansprüche 3 bis 13, wenn abhängig davon, wobei der Flüssigkeitsbehälter (80, 80') Folgendes ist:
- entfernbar aus einer solchen Maschine (1) zur Wartung, beispielsweise zum Füllen, Entleeren und/oder Reinigen; und/oder
- befestigt an einem Maschinenfuß (61), beispielsweise dem Fuß (61') nach Anspruch 10, wobei der Maschinenfuß (61) hinausragt über:
- mindestens eine der äußeren lateralen Flächen (30A), wobei der Behälter (80') angrenzend an die mindestens eine der äußeren lateralen Flächen angeordnet ist;
- die äußere vordere Fläche, wobei der Behälter angrenzend an die äußere vordere Fläche angeordnet ist; oder
- die äußere hintere Fläche, wobei der Behälter angrenzend an die äußere hintere Fläche angeordnet ist,
wobei der Flüssigkeitsbehälter (80, 80') optional eine Form aufweist, die:
A) sich über im Wesentlichen mindestens eine der gesamten äußeren lateralen Fläche (30, 30') und und/oder über im Wesentlichen die gesamte äußere hintere Fläche erstreckt;
B) im Allgemeinen parallelflach ist;
C) im Allgemeinen zylindrisch mit einer kreisförmigen oder teilkreisförmigen oder sichelförmigen oder elliptischen oder halbelliptischen Basis ist; oder
D) mindestens zwei der Merkmale A), B) und C) kombiniert.

15. Maschine nach einem der vorhergehenden Ansprüche, die einen Sitz (15) zum Aufnehmen einer entfernbaren Wartungseinheit (16) über eine Öffnung (15a) in der äußeren vorderen Fläche (10) aufweist, wobei die Wartungseinheit (16) optional:
- einen Behälter zum Sammeln von Abfallmaterial wie Kapseln (2) nach Gebrauch und/oder Restflüssigkeit umfasst; und/oder
- eine Zuführeinrichtung zum Zuführen der Getränkebestandteilkapseln (2) und/oder eines anderen Bestandteils zum Bilden des auszugebenden Getränks (84) und/oder eines Reinigungsmittels umfasst; und/oder
- daran gehindert wird, entfernt oder vom Trägerkörper (65) für den Benutzerbehälter in den Sitz (15) eingesetzt zu werden, wenn sich der Körper (65) angrenzend an und vor der Öffnung (15a) befindet:
- wobei in der ersten Position des Körpers (15a) die Wartungseinheit (16) entfernbar oder in den Sitz (15) einsetzbar ist, wenn sich der Trägerkörper (65) in der zweiten Position befindet; oder
- wobei in der zweiten Position des Körpers (15a) die Wartungseinheit (16) entfernbar oder in den Sitz (15) einsetzbar ist, wenn sich der Trägerkörper (65) in der ersten Position befindet.

## Revendications

1. Machine (1) pour distribuer une boisson (84) à partir d'une capsule (2) contenant un ingrédient de boisson, comprenant :
- un boîtier externe (10, 30, 30', 40, 50, 60) ayant une face avant externe (10) et facultativement au moins l'une parmi : une ou plusieurs faces de côté latérales externes (30, 30') ; une face arrière externe (40) ; une face supérieure externe (50) ; et une face inférieure externe (60) ;
- une sortie de boisson (11) située sur la face avant externe (10) et au-dessus d'une zone avant (20) pour placer un réceptacle d'utilisateur (3, 4) pour collecter la boisson (84) distribuée depuis la sortie (11) ;
- un dispositif de manipulation de capsule (70) qui est situé dans le boîtier (10, 30, 30', 40, 50, 60) et qui est raccordé fluidiquement à la sortie de boisson (11) et qui a une première partie (71) et une deuxième partie (72) qui sont relativement mobiles entre une position de transfert pour recevoir et/ou évacuer ladite capsule (2) et une position d'extraction pour extraire ladite capsule (2) entre les première et deuxième parties (71, 72) ;
- une ouverture (51) dans le boîtier externe (10, 30, 30', 40, 50, 60), telle que dans ladite face avant ou latérale ou arrière ou supérieure externe (10, 30, 30', 40, 50), laquelle ouverture (51) mène dans un passage (52) pour guider ladite capsule (2) vers le dispositif de manipulation de capsule (70) avec ses parties dans la position de transfert, lesquelles parties sont ensuite relativement mobiles vers leur position d'extraction pour extraire ladite capsule (2) ;
- un couvercle (55) qui est mobile de manière adjacente au boîtier externe (10, 30, 30', 40, 50, 60), comme de manière coulissante et/ou pivotante, entre une position ouverte éloignée de l'ouverture (51) pour permettre l'insertion de ladite capsule dans le passage (52) via l'ouverture (51) et une position fermée sur ou à travers l'ouverture (51) pour empêcher l'insertion de ladite capsule (2) dans le passage (52) via l'ouverture (51) ; et
- une interface utilisateur (90) pouvant être actionnée par un utilisateur pour extraire ladite capsule (2) entre les première et deuxième parties (71, 72) dans leur position d'extraction,
facultativement les première et deuxième parties (71, 72) étant :
- mobiles manuellement, comme par une poignée d'utilisateur et/ou mobiles automatiquement, comme par un moteur, entre les positions de transfert et d'extraction ; et/ou
- agencées pour former en position d'extraction une chambre de mélange (73) pour loger ladite capsule (2), par exemple une chambre d'infusion (73), telle qu'une chambre délimitée par au moins une cavité (71') dans l'une (71) desdites première et deuxième parties (71, 72) et par une cavité ou un capot coopérant(e) (72') formé(e) par l'autre (72) desdites première et deuxième parties (71, 72),
**caractérisée en ce que** l'interface utilisateur (90) est :
- couverte par le couvercle (55) lorsque le couvercle est dans la position ouverte de sorte que l'interface utilisateur peut être actionnée par ledit utilisateur lorsque le dispositif de manipulation de capsule (70) est accessible depuis l'extérieur via l'ouverture (51) et le passage (52) ; et
- découverte par le couvercle (55) lorsque le couvercle est dans la position fermée de sorte que l'interface utilisateur peut être actionnée par ledit utilisateur lorsque le dispositif de manipulation de capsule (70) est inaccessible depuis l'extérieur (51) via l'ouverture (52) et le passage.

2. Machine selon la revendication 1, qui comprend un circuit de fluide pour faire circuler un ingrédient de boisson depuis ladite capsule (2) lorsqu'elle est extraite entre les première et deuxième parties (71, 72), le circuit de fluide étant raccordé fluidiquement à une source de liquide (80, 80'), tel qu'un réservoir d'eau et comprenant un dispositif d'entraînement de liquide (81), tel qu'une pompe, pour entraîner ledit liquide depuis la source (80, 80') dans le dispositif de manipulation de capsule (70) pour alimenter ledit liquide vers ladite capsule (2), par exemple, par le biais d'un dispositif de conditionnement de température (82), tel qu'un élément chauffant et/ou un refroidisseur et via une entrée de la première ou deuxième partie (71, 72).

3. Machine selon la revendication 2, dans laquelle l'interface utilisateur (90) est configurée pour commander le dispositif d'entraînement de liquide pour entraîner ledit liquide depuis la source de liquide (80, 80') dans le dispositif de manipulation de capsule (70), facultativement ladite machine (1) comprenant une ou plusieurs interfaces utilisateur supplémentaires (91, 92) telles que d'autres interfaces utilisateur (91, 92) pour régler au moins un paramètre relatif à la préparation de boisson, à la gestion d'alimentation et à l'entretien de la machine.

4. Machine selon une quelconque revendication précédente, qui comprend un guide de fluide (83) pour relier fluidiquement le dispositif de manipulation de capsule (70) à la sortie (11) le long d'une direction de guidage (83'), une direction générale d'extraction (70') dudit ingrédient de boisson dans ladite capsule (2) et une direction (12) de distribution de ladite boisson (84) par la sortie (11) s'étendant le long de lignes d'inclinaison, facultativement la direction de distribution (12) et la direction de guidage (83') étant dans un plan qui est généralement orthogonal à la direction générale d'extraction (70').

5. Machine selon une quelconque revendication précédente, qui comprend deux faces de côté latérales espacées externes (30, 30') qui s'étendent vers l'arrière derrière la face avant externe (10) et qui se font face mutuellement et dans laquelle au moins l'une (72) des première et deuxième parties (71, 72) du dispositif de manipulation de capsule (70) est agencée pour effectuer une translation vers et à l'écart d'au moins l'une des deux faces latérales de côté externes (30, 30') de sorte que les première et deuxième parties (71, 72) se déplacent relativement entre les positions de transfert et d'extraction.

6. Machine selon la revendication 5, dans laquelle ladite au moins une (72) des première et deuxième parties (71, 72) qui est agencée de manière à effectuer une translation vers et à l'écart de ladite au moins une des deux faces latérales de côté externes (30, 30') est conçue pour se déplacer généralement en parallèle à au moins une parmi : la face avant externe (10) ; ladite face arrière externe (40) ; ladite face supérieure externe (50) ; et ladite face inférieure externe (60).

7. Machine selon la revendication 5 ou 6, dans laquelle les première et deuxième parties (71, 72) sont relativement mobiles entre une position de transfert pour recevoir et/ou évacuer ladite capsule (2) et une position d'extraction pour extraire ladite capsule (2) entre les première et deuxième parties (71, 72) le long d'un axe de translation (70') qui intercepte au moins l'une parmi les première et deuxième faces latérales de côté externes (30, 30'), l'axe de translation (70') s'étendant facultativement de façon généralement parallèle à au moins l'une parmi : la face avant externe (10) ; ladite face arrière externe (40) ; ladite face supérieure externe (50) ; et ladite face inférieure externe (60).

8. Machine selon l'une quelconque des revendications 5 à 7, dans laquelle ladite au moins une (72) des première et deuxième parties (71, 72) qui est agencée pour effectuer une translation vers et à l'écart de ladite au moins une des deux faces latérales de côté externes (30, 30') est agencée pour se déplacer de façon généralement parallèle à une direction générale d'extraction (70') dudit ingrédient de boisson dans ladite capsule (2) lorsqu'elle est extraite entre les première et deuxième parties (71, 72).

9. Machine selon une quelconque revendication précédente, dans laquelle la zone avant (20) comprend un corps de support mobile de réceptacle d'utilisateur (65), tel qu'un corps de support (65) mobile entre une première position pour placer un petit réceptacle d'utilisateur (3) sous la sortie (11) et une deuxième position pour placer un grand réceptacle d'utilisateur (4) sous la sortie (11).

10. Machine selon une quelconque revendication précédente, qui comprend un pied (61, 61') faisant saillie devant la face avant externe (10) et s'étendant le long de la face avant externe (10) pour former et/ou supporter la zone avant (20).

11. Machine selon une quelconque revendication précédente, qui comprend un corps de support mobile de réceptacle d'utilisateur (65) qui a une surface supérieure de mise en place (66) et qui est mobile le long de la face avant externe (10) :
- depuis la première position au niveau de la zone avant (20) sous la sortie (11) pour supporter sur la surface supérieure de mise en place (66) un petit réceptacle d'utilisateur (3) sous la sortie (11);
- vers une deuxième position éloignée de la sortie (11) de sorte qu'un grand réceptacle d'utilisateur (4) peut être placé sur une surface inférieure de mise en place (67) sous la sortie (11),
facultativement ledit pied (61, 61') selon la revendication 10 formant la surface inférieure de mise en place (67) et/ou supportant le corps de support mobile de réceptacle d'utilisateur (65) dans au moins une des première et deuxième positions.

12. Machine selon la revendication 11, dans laquelle le corps de support mobile de réceptacle d'utilisateur (65) est fixé à la face avant externe (10) et/ou audit pied (61, 61') de la revendication 10.

13. Machine selon la revendication 11 ou 12, qui comprend un moyen de raccordement (68, 69, 69a) pour raccorder le corps de support de réceptacle d'utilisateur (65) à la face avant externe (10), le corps de support de réceptacle d'utilisateur (65) comportant un raccord (66a, 66b) qui est raccordé ou peut être raccordé au moyen de raccordement (68, 69, 69a) pour maintenir le corps de réceptacle d'utilisateur (65) dans les première et deuxième positions et, par exemple, pour guider le corps de réceptacle d'utilisateur (65) de la première position vers la deuxième position et inversement, facultativement le moyen de raccordement (68) étant :
A) situé sur la face avant externe (10) et/ou sur ledit pied (61, 61') de la revendication 10 ;
B) pourvu d'une direction (68') qui s'étend généralement le long d'une partie inférieure (10a) de la face avant externe (10) de sorte que le corps de support de réceptacle d'utilisateur (65) est mobile avec son raccord (66a, 66b) en relation avec le moyen de raccordement (68, 69, 69a) depuis la première position vers la deuxième position et inversement le long de ladite direction (68') s'étendant le long de la partie inférieure (10a), facultativement la direction (68') du moyen de raccordement (68, 69, 69a) s'étendant sur :
- la partie inférieure (10a) de la face avant externe (10) ; et/ou
- une zone avant (20) formée par un pied de machine (61, 61') faisant saillie devant la partie inférieure (10a) de la face avant externe (10) et s'étendant le long de la face avant externe (10) ;
C) muni d'un agencement mécanique comprenant au moins l'un de :
- un rail coopérant avec un raccord de rail du corps de support (65) et/ou une rainure (68) coopérant avec un raccord de rainure (66a) du corps de support (65), tel qu'un coulisseau de rail et/ou un coulisseau de rainure (66a) du corps de support ayant un seul degré de liberté le long du rail et/ou de la rainure lorsqu'il lui est raccordé, le rail et/ou la rainure et le coulisseau de rail et/ou de rainure ayant facultativement une forme généralement en queue d'aronde pour coopérer ensemble le long d'un degré unique de liberté ;
- une courroie ou une chaîne fixée au corps de support et mobile le long de la face avant externe, telle qu'une courroie ou une chaîne dans une boucle ouverte ou fermée ; et
- un dispositif de positionnement libérable local pour guider le corps de support (65) dans la première position ou dans la deuxième position, tel qu'un dispositif de positionnement à fiche et prise ou un dispositif de positionnement à crochet ou un dispositif de positionnement à encliquetage ;
D) pourvu d'un agencement magnétique de sorte que les moyens de raccordement (69, 69a) et le raccord (66b) sont magnétiquement contraints, facultativement :
- le raccord (66b) comprenant un élément de génération de champ magnétique qui est agencé pour être magnétiquement contraint contre un élément ferromagnétique correspondant du moyen de raccordement (68, 69a) ; ou
- le moyen de raccordement (68, 69a) comprenant un élément de génération de champ magnétique qui est agencé pour être magnétiquement contraint contre un élément ferromagnétique correspondant du raccord (66b) ; ou
- le moyen de raccordement (68, 69a) comprenant un élément de génération de champ magnétique qui est agencé pour être magnétiquement contraint contre un élément de génération de champ magnétique correspondant du raccord (66b) ;
par exemple :
- l'élément de génération de champ magnétique comprenant un élément électroaimant ou un élément magnétique permanent, par exemple constitué d'au moins l'un parmi le fer, le nickel, le cobalt, des métaux des terres rares, par exemple le lanthanide et des alliages et oxydes contenant de tels métaux ainsi que des polymères (par exemple, des plastiques) portant de tels éléments et composants ; et/ou
- l'élément ferromagnétique étant constitué d'au moins un parmi Co, Fe, Fe₂O₃, FeOFe₂O₃, NiOFe₂O₃, CuOFe₂O₃, MgO, Fe₂O₃, Nd₂Fe₁₄B, Mn, Bi, Ni, MnSb, MnOFe₂O₃, Y₃Fe₅O₁₂, CrO₂, MnAs, Gd, Dy, EuO, Cu₂MnAl, Cu₂MnIn, Cu₂MnSn, Ni₂MnAl, Ni₂MnIn, Ni₂MnSn, Ni₂MnSb, Ni₂MnGa, Co₂MnAl, Co₂MnSi, Co₂MnGa, Co₂MnGe, SmCo₅, Sm₂Co₁₇, Pd₂MnAl, Pd₂MnIn, Pd₂MnSn, Pd₂MnSb, Co₂FeSi, Fe₃Si, Fe₂VAl, Mn₂VGa et Co₂FeGe ;
ou
E) une combinaison de deux ou plusieurs des caractéristiques A), B), C) et D).

14. Machine selon la revendication 2 ou l'une quelconque des revendications 3 à 13 lorsqu'elle dépend de celle-ci, dans laquelle le réservoir de liquide (80, 80') est :
- amovible d'une telle machine (1) pour l'entretien, comme pour le remplissage, le vidage et/ou le nettoyage ; et/ou
- monté sur un pied de machine (61'), tel que ledit pied
(61') selon la revendication 10, le pied de machine (61') faisant saillie au-delà de :
- au moins une des faces latérales de côté externes (30'), le réservoir (80') étant situé de manière adjacente à ladite au moins une des faces de côté externes ;
- la face avant externe, le réservoir étant situé adjacent à la face avant externe ; ou
- ladite face arrière externe, le réservoir étant situé adjacent à ladite face arrière externe,
facultativement, le réservoir de liquide (80, 80') ayant une forme qui :
A) s'étend sur sensiblement au moins l'une de la totalité de la face latérale de côté externe (30, 30') et/ou sur sensiblement la totalité de la face arrière externe ;
B) est généralement parallélépipédique ;
C) est généralement cylindrique avec une base circulaire ou en partie circulaire ou en croissant ou elliptique ou semi-elliptique ; ou
D) combine au moins deux des caractéristiques A), B) et C).

15. Machine selon une quelconque revendication précédente, qui comporte un siège (15) pour recevoir une unité d'entretien amovible (16) via une ouverture (15a) dans la face avant externe (10), facultativement l'unité d'entretien (16) :
- comprenant un réceptacle pour collecter des déchets tels que des capsules (2) lors de l'utilisation et/ou du liquide résiduel ; et/ou
- comprenant un dispositif d'alimentation pour alimenter lesdites capsules d'ingrédient de boisson (2) et/ou un autre ingrédient pour former ladite boisson (84) à distribuer et/ou un agent de nettoyage ; et/ou
- ne pouvant pas être retirée ou insérée dans le siège (15) par le corps de support de réceptacle d'utilisateur (65) lorsque le corps (65) est adjacent à, et devant, l'ouverture (15a) :
- dans la première position du corps (15a), l'unité d'entretien (16) étant amovible ou insérable dans le siège (15) lorsque le corps de support (65) est dans la deuxième position ; ou
- dans la deuxième position du corps (15a), l'unité d'entretien (16) étant amovible ou insérable dans le siège (15) lorsque le corps de support (65) est dans la première position.
